# EUROPEAN PATENT APPLICATION

(11) **EP 4 389 304 A1**
(43) Date of publication of application: **26.06.2024**
(21) Application number: 23216035.8
(22) Date of filing: 12.12.2023
(51) Int. Cl.: B05C 11/10, B01F 35/213, B01F 35/22, B05C 5/02

(54) **MONITORING MATERIALS IN DISPENSING EQUIPMENT**

(30) Priority: 12.12.2022 US 202263431897 P
(71) Applicant: C-Therm Technologies Ltd, Fredericton, NB E3B 6Z9 (CA)
(72) Inventor: EMANUEL, Michael, St. Laurent, QC H4M 1H2 (CA); HARRIS, Adam, Fredericton NB, E3A 3P7 (CA); BROWN, Brandon C., Fredericton NB, E3B 9P8 (CA)
(74) Representative: ip21 Ltd

(57) **Abstract**

A sensor, or sensors, are used to measure thermal characteristics of a material dispensed by dispensing equipment. The measured thermal characteristics can be used to ensure that the material that will be dispensed is thoroughly mixed so that once cured the material will have relatively consistent thermal characteristics across different regions.

## Description

### RELATED APPLICATIONS

The current application claims priority to US Provisional Application 63/431,897 filed December 12, 2022, the entire contents of which are incorporated herein by reference in their entirety for all purposes.

### TECHNICAL FIELD

The current disclosure relates to monitoring thermal transport properties of materials, or a mixture of materials, that are processed with dispensing equipment, and in particular to monitoring mixtures with filler materials used to adjust thermal transport properties of the mixture being dispensed.

### BACKGROUND

Various manufacturing processes can require dispensing machines to dispense material. The material dispensed may be used for various purposes including as adhesives, potting compounds, water proofing, thermal interface materials, etc. The material dispensed may be a single or multi-component compound that cures once dispensed. The materials may include filler materials used to alter some properties of the carrier material, such as its thermal transport properties. One or more compositions may be used in the dispensing machine in which case the compositions are mixed in the dispensing machine prior to ejection through a nozzle. The dispensed material may be used to create structures, layers, insulation or heat conduction media. In particular, the dispensed composition may be used for thermal and/or electrical insulation of a heat generation device such as battery packs or electric motor and may act as a heat dissipation or energy storage medium.

In some applications, the thermal transport characteristics of the dispensed material may be important. For example, in electrical vehicles, thermal management of battery packs is critical. The battery packs, motors and other components may include a heat transfer material to help with the thermal management. The heat transfer material can be applied to the battery packs, motors and/or other components, from the dispensing equipment and then allowed to cure. When used as a heat transfer component, if the dispensed material is not thoroughly mixed, the resulting cured material may have differing thermal characteristics in different regions, which can possibly lead to undesirable performance.

An additional, alternative, and/or improved system and method for dispensing thermal components from dispensing equipment is desirable.

### SUMMARY

In a first main embodiment there is provided a system for dispensing a curable material comprising: a feedstock container for holding at least a first portion of the curable material to be dispensed; dispensing equipment configured to dispense the curable material from the feedstock container to a dispensing location; and a thermal transport characteristic sensor arranged in or on one or more of the feedstock container and the dispensing equipment to measure a thermal transport characteristic of the curable material.

In a further embodiment of the first embodiment described above, there is further provided a controller connected to the thermal transport characteristic sensor, the controller configured to determine, based on data from the thermal transport characteristic sensor, one or more of: thermal conductivity of the curable material; thermal effusivity of the curable material; and thermal diffusivity of the curable material.

In a further embodiment of any of the embodiments described above, the thermal transport characteristic sensor is arranged within the feedstock container.

In a further embodiment of any of the embodiments described above, the system further comprises one or more additional thermal transport characteristic sensors connected to the controller and arranged in or on one or more of the feedstock container and the dispensing equipment.

In a further embodiment of the embodiment described above, the thermal transport characteristic sensor is arranged in or on a lid of the feedstock container and at least one of the one or more additional thermal transport characteristic sensors is arranged in or on a portion of the dispensing equipment.

In a further embodiment of the embodiment described above, the dispensing equipment comprises a dispensing tube and a dispensing pump.

In a further embodiment of any of the embodiments described above, the curable material comprises a carrier and a filler that alters a thermal property of the carrier.

In a further embodiment of the embodiment described above, filler comprises one or more of: particles of metallic materials; particles of ceramic materials; and particles of polymeric materials.

In a further embodiment of the two embodiments described above, the thermal transport characteristic of the curable material measured by the thermal transport characteristic sensor is used to determine consistency of the carrier and filler within the curable material.

In a further embodiment of any of the embodiments described above, the curable material comprises a one-part curable material.

In a further embodiment of any of the embodiments described above, the system further comprises a second feedstock container for holding a second portion of the curable material to be dispensed.

In a further embodiment of the embodiment described above, the curable material comprises a two-part curable material, and the first portion of the curable material is a first component of the two-part curable material and the second portion of the curable material is a second component of the two-part curable material.

In a further embodiment of the embodiment described above, the filler is included in at least one of the first portion of the curable material and the second portion of the curable material.

In a further embodiment of any the embodiments described above, the system further comprising a second-component thermal transport characteristic sensor arranged in or on the second feedstock container.

In a further embodiment of any the embodiments described above, the system further comprising a mixing thermal transport characteristic sensor arranged at or after a mixing location within the dispensing equipment of the two-part curable material.

In a further embodiment of any the embodiments described above, the system further comprising a dispensing thermal transport characteristic sensor arranged to measure the thermal transport characteristic of the curable material as it is dispensed.

In a further embodiment of the embodiment described above, the dispensing thermal transport characteristic sensor is arranged at a dispensing end of the dispensing equipment.

In a further embodiment of the embodiment described above, the dispensing thermal transport characteristic sensor is arranged at a location that allows the dispensing equipment to dispense the curable material onto the dispensing thermal transport characteristic sensor.

In a further embodiment of any of the embodiments described above, the thermal transport characteristic sensor is arranged to perform at least one of an in-line measurement, an at-line measurement and an off-line measurement.

In a further embodiment of any of the embodiments described above, the thermal transport characteristic sensor comprises a contact sensor or a contactless sensor.

In a further embodiment of the embodiment described above, the contact sensor comprises at least one of a Modified Transient Plane Source (MTPS) sensor and a needle probe sensor.

In a further embodiment of the embodiment described above, the contactless sensor comprises a thermo-reflectance sensor.

In a second main embodiment there is provided a method of dispensing a curable material comprising: mixing at least a portion of a curable material within a feedstock container; measuring, with a thermal transport sensor a thermal transport characteristic of the curable material; determining from the measured thermal transport characteristics that the curable material is acceptable to be dispensed; and dispensing the curable material from a feedstock container using dispensing equipment.

In a further embodiment of the second embodiment, the curable material is acceptable when the measurement of the thermal transport characteristic indicates that the curable material is consistently mixed.

In a further embodiment of the method embodiment described above, the thermal transport characteristics comprises one or more of: thermal conductivity of the curable material; thermal effusivity of the curable material; and thermal diffusivity of the curable material.

In a further embodiment of any of the method embodiments described above, the thermal transport characteristic sensor is arranged to perform at least one of an in-line measurement, an at-line measurement and an off-line measurement.

In a further embodiment of any of the method embodiments described above, the thermal transport characteristic sensor comprises a contact sensor or a contactless sensor,

In a further embodiment of the method embodiment described above, the contact sensor comprises at least one of a Modified Transient Plane Source (MTPS) sensor and a needle probe sensor.

In a further embodiment of the method embodiment described above, the contactless sensor comprises a thermo-reflectance sensor.

### BRIEF DESCRIPTION OF THE DRAWINGS

Further features and advantages of the present disclosure will become apparent from the following detailed description, taken in combination with the appended drawings, in which:
FIG. 1 depicts dispensing equipment incorporating a sensor for measuring thermal transport characteristics of the material being dispensed;
FIG. 2 depicts an illustrative graph of thermal transport property over time measured in a system of FIG. 1 for a composition with filler being mixed;
FIG. 3 depicts dispensing equipment incorporating a plurality of sensors for measuring thermal transport characteristics of the material being dispensed;
FIG. 4 depicts an illustrative graph of effusivity over time measured in a system of FIG. 2 for a composition with filler being mixed;
FIG. 5 depicts further dispensing equipment incorporating a plurality of sensors for measuring thermal transport characteristics of the material being dispensed;
FIG. 6 depicts dispensing equipment incorporating a plurality of sensors for measuring thermal transport characteristics of the material being dispensed;
FIG. 7 depicts a method of dispensing a material while measuring a thermal transport characteristic; and
FIG. 8 depicts a method for determining an acceptable thermal transport characteristic of a material being dispensed.

### DETAILED DESCRIPTION

In accordance with the present disclosure there is provided a system for dispensing a curable material comprising: a feedstock container for holding at least a first portion of the curable material to be dispensed; dispensing equipment configured to dispense the curable material from the feedstock container to a dispensing location; and a thermal transport characteristic sensor arranged in or on one or more of the feedstock container and the dispensing equipment to measure a thermal transport characteristic of the curable material.

In a further embodiment of the system, the system further comprises a controller connected to the thermal transport characteristic sensor, the controller configured to determine, based on data from the thermal transport characteristic sensor, one or more of: thermal conductivity of the curable material; thermal effusivity of the curable material; and thermal diffusivity of the curable material.

In a further embodiment of the system, the system further comprises one or more additional thermal transport characteristic sensors connected to the controller and arranged in or on one or more of the feedstock container and the dispensing equipment.

In a further embodiment of the system, the thermal transport characteristic sensor is arranged in or on the feedstock container and at least one of the one or more additional thermal transport characteristic sensors is arranged in or on a portion of the dispensing equipment.

In a further embodiment of the system, the curable material comprises a carrier and a filler that alters a thermal property of the carrier, wherein the filler comprises one or more of: particles of metallic materials; particles of ceramic materials; and particles of polymeric materials.

In a further embodiment of the system, the curable material comprises a one-part curable material.

In a further embodiment of the system, the system further comprises a second feedstock container for holding a second portion of the curable material to be dispensed.

In a further embodiment of the system, the curable material comprises a two-part curable material, and the first portion of the curable material is a first component of the two-part curable material and the second portion of the curable material is a second component of the two-part curable material.

In a further embodiment of the system, te filler is included in at least one of the first portion of the curable material and the second portion of the curable material.

In a further embodiment of the system, the system further comprises a mixing thermal transport characteristic sensor arranged at or after a mixing location within the dispensing equipment of the two-part curable material.

In a further embodiment of the system, the system further comprises a dispensing thermal transport characteristic sensor arranged to measure the thermal transport characteristic of the curable material as it is dispensed, wherein the dispensing thermal transport characteristic sensor is arranged at a location that allows the dispensing equipment to dispense the curable material onto the dispensing thermal transport characteristic sensor and the dispensing thermal transport characteristic sensor is able to measure the thermal transport characteristics of the dispensed curable material in both an uncured state and a cured state.

In a further embodiment of the system, the thermal transport characteristic sensor comprises at least one of a contact sensor or a contactless sensor, wherein the contact sensor comprises at least one of a Modified Transient Plane Source (MTPS) sensor and a needle probe sensor and the contactless sensor comprises a thermo-reflectance sensor.

In accordance with the present disclosure there is provided a method of dispensing a curable material, the method comprising: mixing at least a portion of a curable material within a feedstock container; measuring, with a thermal transport sensor a thermal transport characteristic of the curable material; determining from the measured thermal transport characteristics that the curable material is acceptable to be dispensed; and dispensing the curable material from a feedstock container using dispensing equipment.

In a further embodiment of the method, the curable material is acceptable when the measurement of the thermal transport characteristic indicates that the curable material is consistently mixed.

In a further embodiment of the method, the thermal transport characteristics comprises one or more of: thermal conductivity of the curable material; thermal effusivity of the curable material; and thermal diffusivity of the curable material.

Various applications may use curable materials to provide a heat transfer material. The curable material may be a one-part compound, sometimes referred to as 1K materials, that can be dispensed on their own or two-part compounds, sometimes referred to as 2K materials, that are mixed together while being dispensed. Regardless of whether it is a 1K or 2K material, a filler material may be incorporated into the 1K or 2K materials in order to provide desired thermal characteristics to the cured material. The filler may arrive already incorporated into the 1k or 2k materials. While the filler material may be thoroughly mixed at the time of manufacturing, it is possible for the filler material to separate, settle and/or agglomerate over time. Additionally or alternatively, the filler materials may be added to the feedstock being dispensed in order to alter the thermal transport characteristics of the cured material. For 2K materials, filler material may be incorporated with a carrier for either one of the components or both. The dispersion of the fillers may change over time based on various factors, including for example, the amount of filler present, the presence of stabilizing or thixotropic agents, storage conditions, time since mixing or manufacturing, shelf-life, etc.

The thermal transport properties of the composition may be important for maintaining an optimal or desired operating temperature of the heat generating device to which the composition is applied. Normally, enhanced thermal transport properties of the dispensed composition are desirable. To achieve the desired thermal transport properties, the dispensed composition may be made of a carrier and a filler, whereby the filler increases the thermal conductivity, thermal effusivity and/or thermal diffusivity of the carrier material. The filler may be composed of particles of metallic, ceramic or polymeric materials or other components.

The filler may not be evenly distributed within the carrier material being dispensed, for example as a result of not being fully mixed initially or the product approaching its shelf-life. Additionally, the filler material can tend to agglomerate, separate and/or settle due to its physical properties being different from the carrier's. Agglomeration is the clumping together of fillers and can be driven by the morphology of the filler. For example, more fibrous fillers can tend to clump together. Sedimentation can be driven by the different density of the filler compared to the carrier. The separation of filler and carrier can increase over time such that feedstock nearing its expiry date may be more stratified compared to fresh feedstock material.

The dispensed material may show large variation in its physical and chemical properties, depending on the concentration and distribution of the filler. In particular, the thermal transport properties, including the thermal effusivity, thermal diffusivity and thermal conductivity, of the dispensed material may vary from one batch of the feedstock to another, as well as within the same batch of feedstock. The variance in the thermal transport properties of the feedstock material can result in a variance in the thermal transport properties of the cured material with certain parts or regions having possibly higher or better thermal transport properties than required and other parts or regions having lower or poorer thermal transport properties. The variance of the dispensed material can limit the heat dissipation of the heat generating device, which can cause overheating and damage to the heat generating device that the material was applied to. In particular, battery packs such as those used in electric vehicles may overheat and cause fire and/or explosion in vehicles and buildings. Applying heat transfer material to a heat generating device that does not meet the required specifications can result in poor performance of, or damage to, the heat generating device or other components. Additionally, the poor thermal performance of the dispensed material may lead to other performance issues such as reduced performance, range and/or life of vehicles or connected components.

As described further below, sensors can be used for monitoring the quality of the dispensed material in dispensing machines. In particular, the sensors can be used for monitoring the thermal transport properties of the material being dispensed. The measurements may be made off-line, at-line and/or in-line. The monitored thermal transport properties can be used to provide an indication or measure of how consistently the feedstock is mixed and/or whether the feedstock material is in an acceptable range for dispensing.

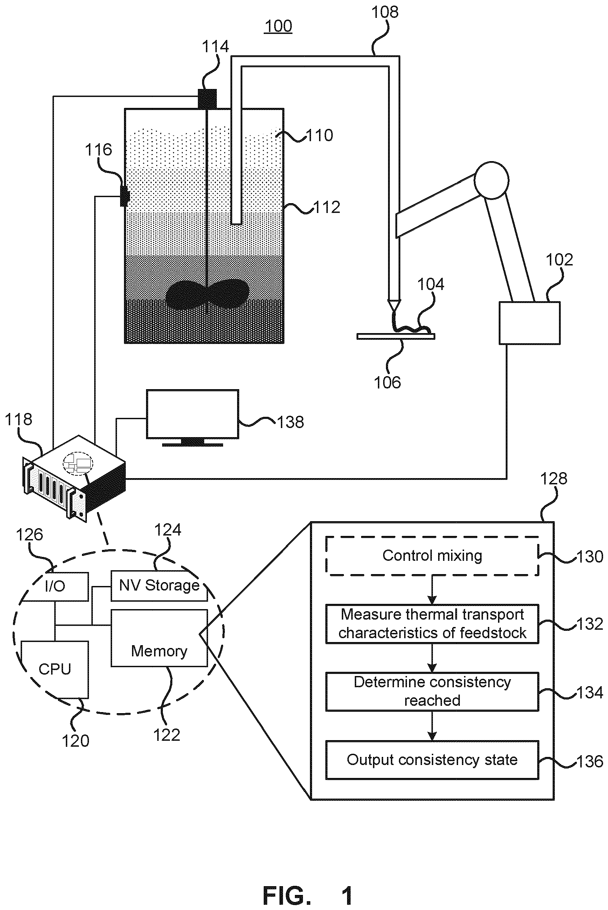

FIG. 1 depicts dispensing equipment incorporating a sensor for measuring thermal transport characteristics of the material being dispensed. The dispensing system 100 may be used in various applications including various manufacturing or assembly processes, including for example in manufacturing or assembling components for electric vehicles such as battery packs, motors or other electrical devices. The dispensing system 100 can include a control arm 102, gantry or other similar control device that can position a dispensing end in a desired position in order to dispense a curable material 104 onto a dispensing location 106. The dispensing location 106 is depicted as a flat surface however it will be appreciated that the dispensing location may be on one or more components being assembled or manufactured. The dispensed material 104 can be pumped or pushed through one or more tubes or delivery channels 108 from a feedstock 110, which is depicted as being held in a feedstock container 112. The feedstock container 112 may be for example a drum or barrel. The feedstock container 112 may be replaced with a new container once empty, or below a useable level, or may be filled with additional curable material. The feedstock container 112 can include a mixing device 114 that can mix the curable material within the container. The mixing device 114 may be omitted in certain applications, either because it is not required or because it may tend to introduce air bubbles that may be undesirable in the feedstock. It will be appreciated that the dispensing equipment depicted in FIG. 1 may not include all of the components of the dispensing system which may further include various pumps, air, vents, valves etc. for delivering the feedstock from the container to the dispensing end.

The feedstock 110 may be a curable material used for various purposes. The curable material may be selected or adjusted in order to provide appropriate properties required by the application. The properties may include physical properties such as the strength, hardness, flexibility, operating temperatures etc., chemical properties, electrical properties and / or thermal transport properties. While the following describes the thermal transport properties of the curable material, it will be appreciated that the curable material may have other properties required for specific applications.

The curable material, once cured, has desirable thermal transport characteristics which may be adjusted or tuned using fillers added to a base carrier of the feedstock. The thermal transport characteristics may include for example, the thermal conductivity, thermal effusivity, and thermal diffusivity. The fillers added may include various materials including particles of metallic, ceramic or polymeric materials. The fillers may be added to the carrier material prior to using as feedstock 110 for the dispensing system 100, or may be mixed on-site by the dispensing equipment. Regardless of when or where the filler is mixed with the carrier material, it is possible for the filler material to be unevenly mixed within the carrier material which can lead to uneven thermal transport characteristics of the cured material. The uneven thermal transport characteristics may result in products being produced that do not meet the specified requirements, or that perform below a desired or acceptable level. The mixing device 114 can be operated in order to mix the feedstock. In FIG. 1 the uneven mixing of the filler and the carrier of the feedstock is depicted as a number of stratified layers, however it will be appreciated that the stratification into a plurality of distinct layers is intended to only be illustrative of the uneven mixing.

In order to ensure that the carrier and filler of the feedstock material is sufficiently mixed such that the filler that alters the thermal transport characteristics of the carrier is evenly distributed throughout the carrier, one or more sensors for measuring thermal transport characteristics may be used. A sensor 116 can be provided within or on the feedstock container 112. The sensor 116 may be located at a fixed location within the feedstock container, or may be moved such that it remains in contact with the feedstock material as the level decreases while it is dispensed.

The sensor 116 is depicted as being located on a side of the feedstock container 112, which may be used when the feedstock material is refilled into the same container. Additionally or alternatively, the sensor, as well as the mixing device 114 and other dispensing components may be attached to a lid or top that can be affixed to different feedstock containers as they are replaced. Additionally or alternatively, sensors may be included on sides of feedstock containers even when the containers are replaced. The sensors may be relatively low cost enough to make such inclusion acceptable, or the feedstock containers with the sensors may be reused.

The sensor 116 may be a contact sensor that needs to be in contact with the feedstock material in order to measure the thermal transport characteristics. The contact sensor can include, for instance, at least one of a Modified Transient Plane Source (MTPS) sensor and, a transient line source such as a needle probe sensor and/or a hot wire sensor. The sensor 116 may be a contactless sensor that does not need to be in direct physical content with the feedstock. The contactless sensor can include, for example, a thermo-reflectance sensor.

Regardless of how the thermal transport sensor 116 is incorporated into the feedstock container or the dispensing equipment, it is able to measure the thermal transport characteristics of the feedstock material. The sensor 116 can be connected to, or in communication with, a controller 118 that can be used in order to determine the thermal transport characteristics of the feedstock material based on the sensor data. The controller is depicted as a server comprising a processor 120 that executes instructions which may be stored in memory 122, and/or non-volatile storage 124. The server may include one or more input/output (I/O) interfaces for connecting various components including for example the sensor 116. It will be appreciated that the controller 118 may be provided in various ways including as an FPGA, ASIC, microcontroller, etc. The controller 118 may be connected to one or more further controllers of the dispensing system 100. For example, the controller 118 can determine the thermal transport characteristics which may be used to control one or more components of the dispensing system such as the mixer and or dispensing control devices 102.

The sensor 116, and controller 118, may be used for monitoring the consistency and quality of feedstock materials used in dispensing equipment. The monitoring is done by measuring the thermal transport properties of the feedstock material within the feedstock container 112. Although sensor 116 is depicted as being arranged in or on the feedstock container, it is possible to arrange the sensor 116 at different locations within, or on, the dispensing equipment in order to provide off-line, in-line, or at-line measurements of the thermal transport characteristics.

As depicted, the controller may comprise instructions which when executed configure the controller to provide various functionality 128. The mixing of the feedstock material may be controlled by the controller 130. Although depicted as being provided by the controller 118, control of the mixing (130) may be implemented by one or more other controllers of the dispensing equipment or may be performed away from the dispensing equipment, including for example prior to delivery of the feedstock. The thermal transport characteristics of the feedstock material are measured (132) by the sensor 116 and the determined thermal transport characteristics, such as the thermal conductivity, thermal effusivity and/or thermal diffusivity of the feedstock material may be used to determine when consistency of the feedstock material is reached (134), or is within an acceptable range. Once the controller determines, based on the measured thermal transport characteristics, that the feedstock is consistently mixed, the consistency state can be output (136). Outputting the consistency information may be provided in various ways, from as simple as an indication light that activates when consistency is reached, or a display 138 that can display the measured thermal transport characteristics, and possibly other information as well as an indication as to the consistency of the feedstock material, including an electrical signal indicating that the feedstock is sufficiently mixed. The thermal transport characteristics can provide an indication of the consistent mixing of the filler within the carrier. Additionally, or alternatively the measured thermal transport characteristics can provide an indication of air bubbles within the feedstock. Outputting the consistency state (136) can also be provided to one or more other control systems, which may for example use the information to control other components of the dispensing system such as the mixing device, and or the dispensing device. When the measured thermal transport characteristics are not in an acceptable range, the dispensing equipment may stop dispensing the material and either take steps to bring the material back into an acceptable range such as mixing the material, adding filler material or other components, etc., or replace the feedstock with a new batch of feedstock.

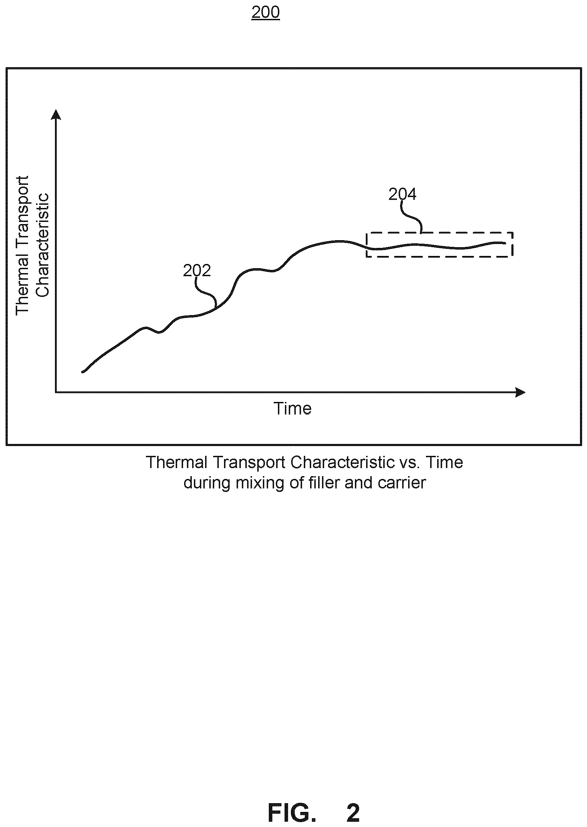

FIG. 2 depicts an illustrative graph of thermal transport property over time measured in a system of FIG. 1 for a composition with filler being mixed. The thermal transport property is depicted as the thermal effusivity, determined from the sensor 116 is depicted as being initially low, which may indicate that the filler and carrier are not evenly mixed. As the filler and carrier are mixed the effusivity can increase 202. As the feedstock becomes evenly mixed, the effusivity will reach a consistent measurement 204 where the effusivity remains the same, within a certain threshold. From the graph 200, it will be appreciated that individual specific measurement or absolute value of the effusivity may not provide a direct indication of the consistency but rather it is the measurement value over a period of time that provides an indication that the feedstock is consistently mixed. Further, rather than time, the sensor measurements could be made over other measurements such as barrel fill level.

While the rate of change of the thermal transport characteristics can be used to determine if the feedstock is consistently mixed, the specific measurement or absolute value of the thermal transport characteristic may also be used to determine if the feedstock material is within an acceptable range to be dispensed. That is, although the feedstock material may be consistently mixed it may not have sufficient filler to meet the required specifications.

Although the thermal transport property is depicted as increasing 202 while being mixed, it will be appreciated that the effusivity could also decrease until consistency is reached.

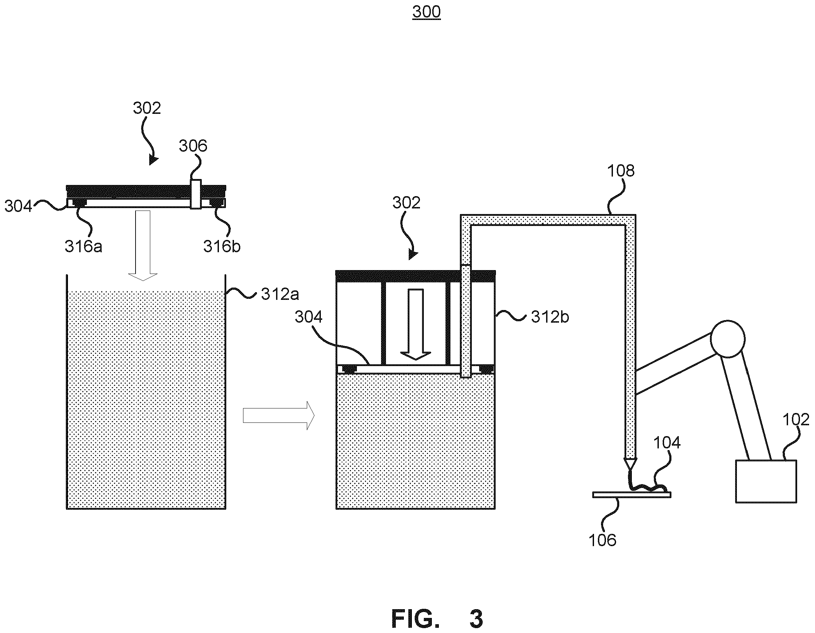

FIG. 3 depicts dispensing equipment incorporating a plurality of sensors for measuring thermal transport characteristics of the material being dispensed. The system 300 is similar to the dispensing system 100 and only the differences are described. As depicted, the dispensing equipment may use a lid or similar device that can be secured to open barrels 312a of the feedstock. The lid may include various components secured to it including for example a plate 304 that can be pressed into the feedstock container to dispense the feedstock through a dispensing tube 306. Additionally, one or more thermal transport characteristic sensors 316a, 316b can be mounted to the lid 302, or more particularly the plate 304 in order to be in contact with the feedstock material. The lid 302 and/or plate 304 or other portions of the dispensing equipment such as a dispensing tube may include one or more vents to release any entrapped air between the feedstock material and the plate when beginning to dispense the feedstock. The lid 302 can be secured to the open barrel, and then used in the dispensing system as depicted by barrel 312b for dispensing the feedstock. The feedstock can be dispensed from the barrel 312b using various techniques including, for example displacement pumps, pressure, which can be provided in various ways. As depicted in FIG. 3, the feedstock may be pumped out of the barrel 312b using a displacement plate 304 that can be pushed down the barrel 312b in order to push the feedstock out of the dispensing tube 306 and towards the dispensing head, although other techniques for dispensing the feedstock from the barrel.

As depicted in FIG. 1, the dispensing system 100 includes a single sensor 116 in the container 112. As depicted in FIG. 3, the dispensing system 300 may include one or more alternative or additional sensors 316a, 316b spaced apart from each other. The sensors 316a, 316b are depicted as being offset from each other on the plate 304, however the sensors may also be spaced apart vertically such as on an arm or similar device that descends from the lid and plate into the feedstock container. The thermal transport characteristic sensors 316a, 316b can measure the thermal transport characteristics of the feedstock in a similar manner as the sensor 116. The use of alternative or additional sensors can provide measurements of thermal transport characteristics at different locations within the feedstock container and as such can improve the determination of the consistency of the feedstock. The sensor measurements can be used to determine when each sensor measurement individually indicates that the mixture is consistent and possibly that each of the different individual measurements are the same, within a threshold, as each other. In order to compare the sensor measurements from the different sensors a calibration process can be performed so that each of the sensors provide consistent measurements.

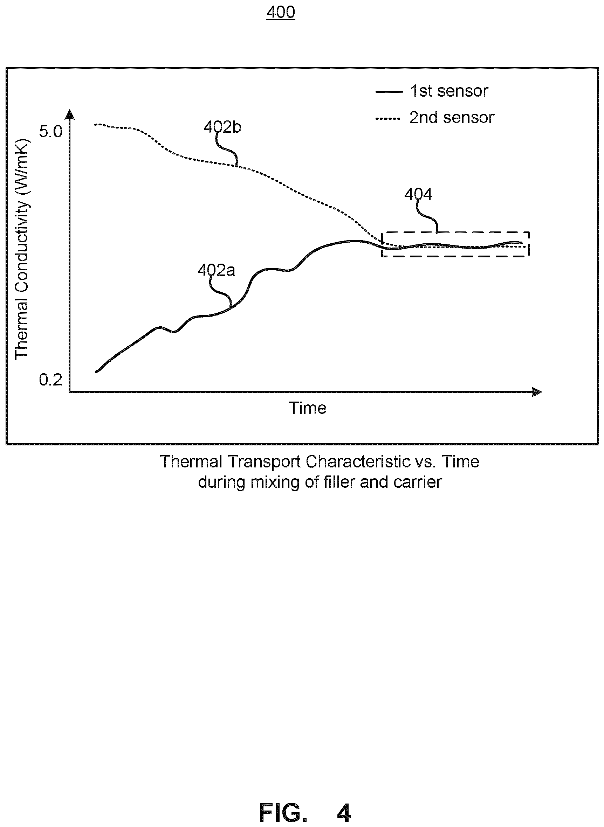

FIG. 4 depicts an illustrative graph of thermal conductivity over time measured in a system of FIG. 3 for a composition with filler being mixed. As depicted, the measurements from the two sensors may increase 402a and decrease 402b respectively as the feedstock is mixed and the filler becomes more evenly distributed within the carrier. Alternatively, it is possible for bother sensor measurements to increase or decrease until they reach an approximate equilibrium. Once the respective measurements have reached a consistency level 404, that is the thermal transport characteristic depicted as thermal conductivity, does not change significantly over time within a threshold amount, it can be used as an indication that the mixture is consistently mixed. Additionally or alternatively, once the measurements of the different sensors reach the same, or similar measurements, it can be determined that the mixture is within an acceptable range for dispensing.

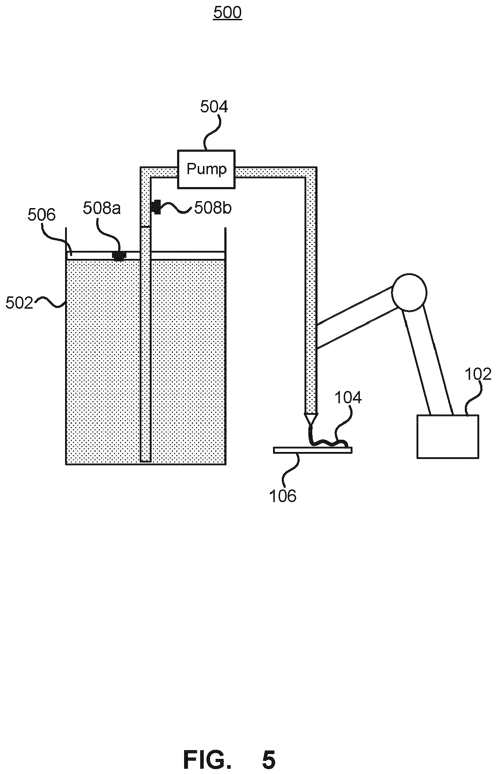

FIG. 5 depicts further dispensing equipment incorporating a plurality of sensors for measuring thermal transport characteristics of the material being dispensed. As depicted, the dispensing system 500 can include a control arm 102 or other similar control device that can position a dispensing end in a desired position in order to dispense a curable material 104 onto a dispensing location 106. The dispensing location 106 is depicted as a flat surface however it will be appreciated that the dispensing location may be on one or more components being assembled or manufactured. A container 502 holds a feedstock material that can be dispensed by the dispensing equipment. A pump 504 may be used to pump the feedstock material from the container 502. A container may include a lid 506 with a sensor 508a mounted within or on the lid 506. It will be appreciated that the lid may move within the container in order to remain in contact with the feedstock material as it is pumped out. Additionally or alternatively, the container may have a liner that collapses as the material is pumped out. Alternatively, the sensor 508a may be a non-contact sensor that is capable of measuring the thermal transport characteristics of the feedstock material even when the sensor is not in contact with the feed stock material which may allow the use of a stationary lid on the container. An alternative or additional sensor 508b may be included in the dispensing tube between the feedstock container 502 and the pump 504, or possibly after the pump. The measurements from both sensors 508a, 508b may be used to determine the thermal transport characteristics of the feedstock material at the different locations within the system where the sensors are located. The measurements may be used to determine whether or not the feedstock material is appropriate for dispensing onto the parts or components. If the feedstock material is not acceptable the feedstock material may be adjusted until it is acceptable and then the feedstock material may be dispensed onto the parts or components. It is possible to dispense the unacceptable material from the dispensing equipment into a waste location. Further, it is possible to halt the dispensing equipment in order to stop or slow the flow of the feedstock material through the dispensing equipment in order to make the required measurements of the thermal transport properties. FIGs. 1 to 5 describe a dispensing system a single feedstock container. It will be appreciated that the dispensing equipment may include one or more additional feedstock containers. The additional feedstock containers may have the same feedstock material or may have a different feedstock material. For example for one-part curable materials, also referred to as 1K materials, the additional feedstock container or containers, which can include respective sensors, can have the same curable material. For two-part curable materials, also referred to as 2K materials, the additional feedstock container may have a second component of the 2K material such as a hardener or curing agent. The second component can include fillers. For 2K materials it is possible to include filler material in only one of the components or in both components.

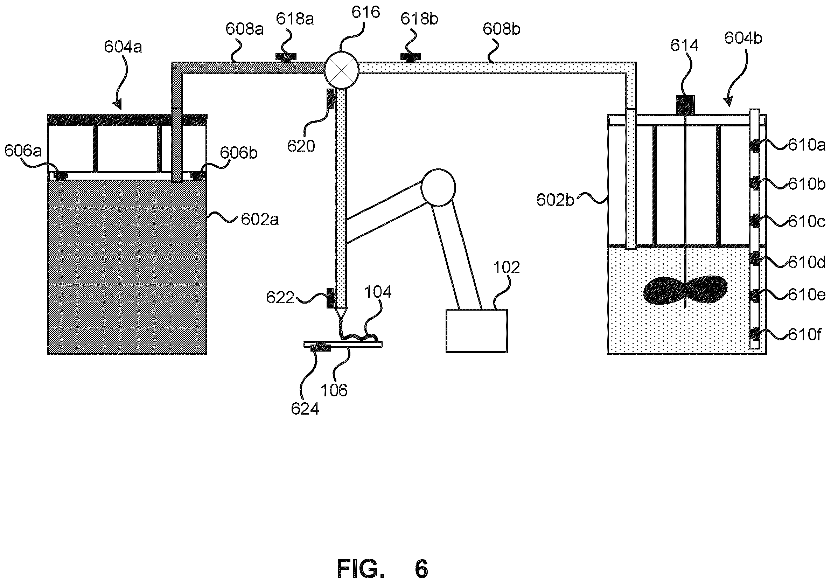

FIG. 6 depicts dispensing equipment incorporating a plurality of sensors for measuring thermal transport characteristics of the material being dispensed. The system 600 is similar to the systems 100, 300, and 500 described above and as such only the differences between the systems will be described further. In contrast to the systems 100, 300 and 500 which include a single feedstock container, as may be used with dispensing 1K materials, the system 600 may include multiple feedstock containers. Although two containers are depicted in FIG. 6, it is possible to include 3 or more feedstock containers.

The two different feedstock containers 602a, 602b may be used for holding separate components of 2K materials or may hold the same feedstock material. Either one of or both of the feedstock containers 602a, 602b may include a mixer 614 as depicted in the second feedstock container 602b or the mixer may be omitted from both feedstock containers 602a, 602b. Both the feedstock containers 602a, 602b are depicted as having a lid 604a, 604b to which components can be secured, including for example sensors 606a, 606b and sensors 610a-610f. As depicted the feedstock container 602a comprises two thermal transport characteristic sensors 606a, 606b on the lid 604a, while the lid 604b has six sensors 610a-610f on an arm. It will be appreciated that the additional sensors may allow measurements to be made as the feedstock is emptied. Additionally or alternatively, one or more sensors may be attached to the moveable pressure plate of the lid used to dispense the feedstock. Although depicted as having a plurality of sensors 606a, 606b and 610a-610f, the additional feedstock containers may have only as single sensor, or no sensor at all.

The feedstock dispensing equipment may further include a mixing valve 616 coupled to feedstock containers 602a, 602b by respective tubes or fluid channels 608a, 608b. The mixing valve 616 can mix the feedstock materials from the respective feedstock containers in an appropriate ratio. Additional or alternative sensors 618a, 618b, 620, 622 and 624 may be included in the dispensing equipment in order to measure the thermal transport characteristics of the curable material at different locations in the dispensing process. For example, one or more sensors 618a, 618b may be arranged on the tubes or fluid channels between the respective feedstock containers and the mixing valve or valves. Additional or alternative sensors 620, 622 and 624 may be arranged after the mixing valves in the dispensing equipment after it is mixed together. Depending upon the sensor, it can be necessary for the material being measured to be relatively stationary. When the sensor is located within the feedstock container, the feedstock may be relatively stationary during measurements given the size of the feedstock container relative to the rate that the feedstock is dispensed from the container. When measuring the feedstock after mixing at the mixing valve, the dispensing may be paused temporarily so that the mixed material is stationary during measurement.

The one or more alternative or additional sensors 622, 624 may be arranged to measure the thermal transport characteristics of the material as it is dispensed. The sensor can be arranged on or at the dispensing head, such as sensor 622, or may be located at a particular location on a dispensing bed, such as sensor 624. For the sensor 624 located on or near the dispensing bed, the dispensing control device 102 may periodically dispense a portion of the mixture onto the sensor in order to measure the thermal transport characteristics. Once the thermal transport characteristic measurements are made the material may be removed from the sensor 322, either before or after the material is cured. When separate from the dispensing head, as depicted in FIG. 6, the sensor 624 can be used to measure the thermal transport characteristics of the material as it is dispensed as well as once it is fully cured. The measurements can be used to provide a mapping between the thermal transport characteristics of the uncured material and the cured material.

The system 600 with multiple different sensors may be used in order to provide off-line measurements, in-line measurements and at-line measurements of the thermal transport characteristics. Off-line measurement can be made while the dispensing equipment is not operating to dispense the material. Such a measurement can include, for example measuring thermal transport characteristics of the feedstock material while the feedstock material is being prepared to be added into the dispensing system. In-line measurements can include, for example measuring the thermal transport characteristics of the feedstock material during operation of the dispensing equipment. The in-line measurements may be made at the feedstock container, mixing valve, dispensing head or other locations within the dispensing equipment. The at-line measurements can include measurements that are made at or in close proximity to the assembly line but are outside of the dispensing equipment and so can be made in parallel to the operation of the dispensing equipment. For example, an at-line measurement may be made by dispensing a portion of the material on a sensor that is at a location that does not interfere with the normal operation of the dispensing equipment. Regardless of whether the measurements are made off-line, at-line, or in-line, the measurements may be used in various ways including for example by displaying the results to an operator for informing the operator's actions, or possibly providing the measurements or results of the measurements to other components of the dispensing system or other systems including quality assurance/quality control systems. For example, the measurements may be provided in real-time or near-real to one or more other controllers for use in controlling the dispensing equipment. The communication between the sensor controllers and other components of the dispensing system may be over a wired or wireless communication channel using one or more different communication standards.

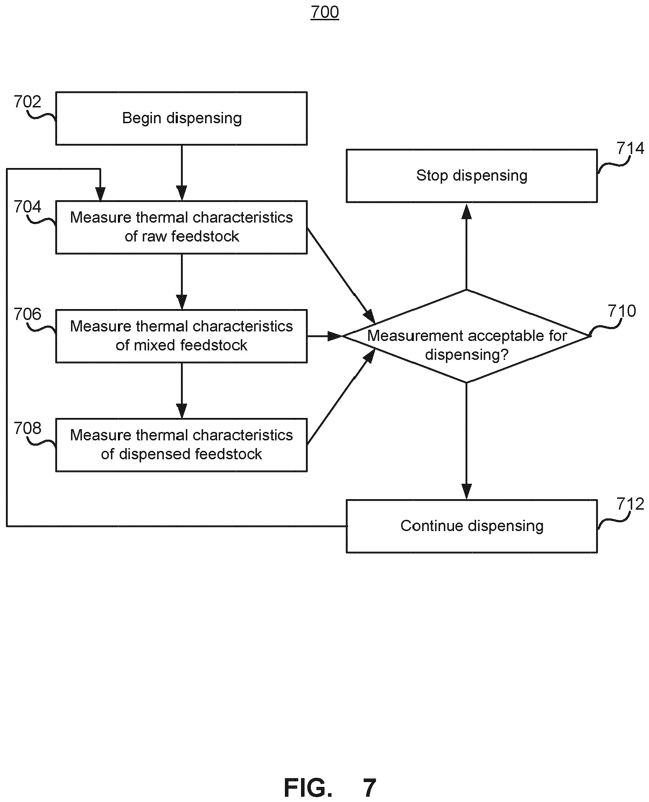

FIG. 7 depicts a method of dispensing a material while measuring a thermal transport characteristic. The method 700 uses multiple sensors to measure the thermal transport characteristics of the curable material at multiple locations within the dispensing equipment. The method 700 can begin dispensing the curable material (702) and the various sensors are used to measure the thermal transport characteristics of raw feedstock (704), measure the thermal transport characteristics of the mixed feedstock (706), assuming the curable material is a 2K material, and measure the thermal transport characteristics of the dispensed feedstock (708). The measurements are evaluated to determine if they are acceptable for dispensing (710). The measurements can be considered acceptable for dispensing if they indicate that the feedstock is mixed consistently and has characteristics within an acceptable range. If the measurements are acceptable (Yes at 710) the dispensing continues. If any of the measurements are not acceptable (No at 710) the dispensing of the material is stopped (714). Once the material dispensing is stopped, the feedstock material can be replaced with new feedstock, or possible adjusted in order to provide acceptable feedstock materials, either by further mixing of the feedstock materials and/or adding additional filler or carrier. Once the thermal transport characteristics have been adjusted and are within an acceptable range, the dispensing may be continued. Although not depicted, the method may include dispensing material that is not acceptable to be dispensed in a waste location. Although the method depicted uses multiple sensors to measure the thermal transport characteristics at multiple locations, a similar method may be used with a single sensor to measure the thermal transport characteristic.

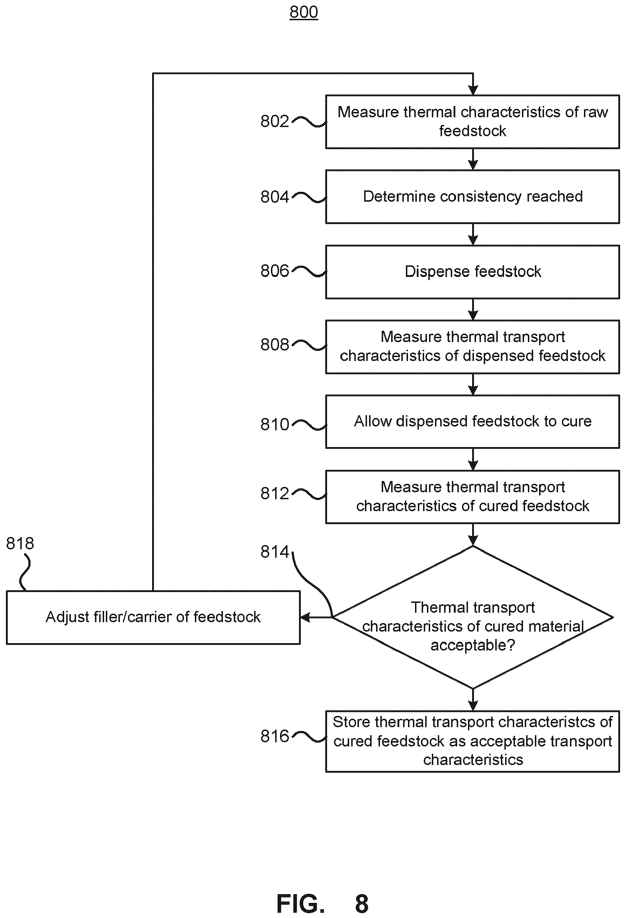

FIG. 8 depicts a method for determining an acceptable thermal transport characteristic of a material being dispensed. The method 800 may be used to determine thermal transport characteristics of the feedstock material and mixed multi-component material that results in a cured material having acceptable thermal transport characteristics. The method measures the thermal transport characteristics of the raw feedstock material (802), which may comprise a carrier and a filler to adjust thermal transport properties of the cured material. Once the raw feedstock material is sufficiently mixed, it is determined that the consistency is reached (804) based on measurements over time of the thermal transport characteristics and the feedstock material is dispensed (806). The thermal transport characteristics of the dispensed material are measured (808) and the dispensed material allowed to cure (810). During normal operation of the dispensing equipment, the dispensed material may be dispensed onto one or more parts or components being manufactured or assembled as well as onto a sensor location for measuring the thermal transport characteristics. While determining acceptable sensor measurements according to the method 800, it is not necessary to dispense the feedstock material onto parts or components. Once cured the thermal transport characteristics of the cured material can be measured (812). Once the thermal transport characteristics of the cured material is measured it is determined whether the thermal transport characteristics are within an acceptable range (814) for the particular application. When the thermal transport characteristics of the cured material are acceptable (Yes at 814), the measurements of the raw feedstock and dispensed material can be stored and used during operation to ensure that the cured material will meet the specification based on the measurements made during dispensing. If the thermal transport characteristics of the cured material are not acceptable (No at 814), the filler and/or carrier of the feedstock can be adjusted (816) and the process performed again. It will be appreciated that during the process for determining acceptable measurements for the thermal transport properties, other properties such as the electrical, chemical and thermal properties, of the cured material can be evaluated and adjusted in preparation of normal operation.

Although certain components and steps have been described, it is contemplated that individually described components, as well as steps, may be combined together into fewer components or steps or the steps may be performed sequentially, non-sequentially or concurrently. Further, features or configurations described with reference to a particular embodiment may be combined with or incorporated into other particular embodiments. For example, sensor locations described with respect to one embodiment may be incorporated into a separate embodiment. Similarly, other features or components such as mixing devices, lids, and lid plates described with respect to a particular embodiment may be incorporated into separate embodiments. Further, although described above as occurring in a particular order, one of ordinary skill in the art having regard to the current teachings will appreciate that the particular order of certain steps relative to other steps may be changed. Similarly, individual components or steps may be provided by a plurality of components or steps. One of ordinary skill in the art having regard to the current teachings will appreciate that the components and processes described herein may be provided by various combinations of software, firmware and/or hardware, other than the specific implementations described herein as illustrative examples.

Numerous additional variations on the methods and apparatus of the various embodiments described above will be apparent to those skilled in the art in view of the above description. Such variations are to be considered within the scope.

## Claims

1. A system for dispensing a curable material comprising:
a feedstock container for holding at least a first portion of the curable material to be dispensed;
dispensing equipment configured to dispense the curable material from the feedstock container to a dispensing location; and
a thermal transport characteristic sensor arranged in or on one or more of the feedstock container and the dispensing equipment to measure a thermal transport characteristic of the curable material.

2. The system of claim 1, further comprising a controller connected to the thermal transport characteristic sensor, the controller configured to determine, based on data from the thermal transport characteristic sensor, one or more of:
thermal conductivity of the curable material;
thermal effusivity of the curable material; and
thermal diffusivity of the curable material.

3. The system of claim 1 or 2, further comprising one or more additional thermal transport characteristic sensors connected to the controller and arranged in or on one or more of the feedstock container and the dispensing equipment.

4. The system of claim 3, wherein the thermal transport characteristic sensor is arranged in or on the feedstock container and at least one of the one or more additional thermal transport characteristic sensors is arranged in or on a portion of the dispensing equipment.

5. The system of any one of claims 1 to 4, wherein the curable material comprises a carrier and a filler that alters a thermal property of the carrier, wherein the filler comprises one or more of:
particles of metallic materials;
particles of ceramic materials; and
particles of polymeric materials.

6. The system of any one of claims 1 to 5, wherein the curable material comprises a one-part curable material.

7. The system of any one of claims 1 to 5, further comprising a second feedstock container for holding a second portion of the curable material to be dispensed.

8. The system of claim 7, wherein the curable material comprises a two-part curable material, and the first portion of the curable material is a first component of the two-part curable material and the second portion of the curable material is a second component of the two-part curable material.

9. The system of claim 8, when dependent upon claim 5, wherein the filler is included in at least one of the first portion of the curable material and the second portion of the curable material.

10. The system of any one of claims 1 to 9, further comprising a mixing thermal transport characteristic sensor arranged at or after a mixing location within the dispensing equipment of the two-part curable material.

11. The system of any one of claims 1 to 10, further comprising a dispensing thermal transport characteristic sensor arranged to measure the thermal transport characteristic of the curable material as it is dispensed, wherein the dispensing thermal transport characteristic sensor is arranged at a location that allows the dispensing equipment to dispense the curable material onto the dispensing thermal transport characteristic sensor and the dispensing thermal transport characteristic sensor is able to measure the thermal transport characteristics of the dispensed curable material in both an uncured state and a cured state.

12. The system of any one of claims 1 to 11, wherein the thermal transport characteristic sensor comprises at least one of a contact sensor or a contactless sensor, wherein the contact sensor comprises at least one of a Modified Transient Plane Source (MTPS) sensor and a needle probe sensor and the contactless sensor comprises a thermo-reflectance sensor.

13. A method of dispensing a curable material comprising:
mixing at least a portion of a curable material within a feedstock container;
measuring, with a thermal transport sensor a thermal transport characteristic of the curable material;
determining from the measured thermal transport characteristics that the curable material is acceptable to be dispensed; and
dispensing the curable material from a feedstock container using dispensing equipment.

14. The method of claim 13, wherein the curable material is acceptable when the measurement of the thermal transport characteristic indicates that the curable material is consistently mixed.

15. The method of 14, wherein the thermal transport characteristics comprises one or more of:
thermal conductivity of the curable material;
thermal effusivity of the curable material; and
thermal diffusivity of the curable material.
